Europäisches Patentamt

(19) European Patent Office

Office européen des brevets

(11) Publication number: **0 239 938 B1**

(12) # EUROPEAN PATENT SPECIFICATION

(45) Date of publication of patent specification :
04.12.91 Bulletin 91/49

(51) Int. Cl.[5] : **A23L 2/26, A23L 2/40,**
**A23L 1/236**

(21) Application number : **87104522.5**

(22) Date of filing : **26.03.87**

(54) Carbonated beverage.

(30) Priority : 01.04.86 JP 74834/86

(43) Date of publication of application :
07.10.87 Bulletin 87/41

(45) Publication of the grant of the patent :
04.12.91 Bulletin 91/49

(84) Designated Contracting States :
CH DE FR GB LI

(56) References cited :
EP-A- 0 109 771
FR-A- 1 463 322
GB-A- 2 103 917
GB-A- 2 153 651
US-A- 2 984 543
US-A- 3 667 962

(73) Proprietor : **AJINOMOTO CO., INC.**
**5-8, Kyobashi 1-chome, Chuo-ku**
**Tokyo 104 (JP)**

(72) Inventor : **Ueda, Shinji c/o Central Research**
**Ajinomoto Co. Inc. No. 1-1, Suzuki-cho**
**Kawasaki-ku**
**Kawasaki-shi Kanagawa-ken (JP)**
Inventor : **Takizawa, Koichi c/o Central**
**Research**
**Ajinomoto Co. Inc. No. 1-1, Suzuki-cho**
**Kawasaki-ku**
**Kawasaki-shi Kanagawa-ken (JP)**

(74) Representative : **Strehl, Schübel-Hopf,**
**Groening**
**Maximilianstrasse 54 Postfach 22 14 55**
**W-8000 München 22 (DE)**

## Description

BACKGROUND OF THE INVENTION

1. Field of the Invention

This invention relates to a carbonated beverage, and more specifically to a carbonated beverage containing a low-calorie sweetener and having a low caloric content, a reduced tendency to cause dental caries, and excellent palatability.

2. Description of the Prior Art

In recent years, low calorie drinks and health foods having reduced tendency to cause caries have been increasingly successful, and there has been a tendency to use low-calorie sweeteners such as aspartame® in carbonated beverages.

Carbonated beverages containing such low-calorie sweetening agents are frequently inferior in taste or flavour to those containing sugar. For example, carbonated beverages containing saccharin or Stevia extract have much lower palatability than those containing sugar because they leave a bitter taste, particularly a bitter after-taste. Among such low-calorie sweeteners, aspartame® exhibits the most favourable characteristic because of its refreshing sweetness and flavour increasing effect. However, carbonated beverages containing saccharin or Stevia extract as well as aspartame® tend to show inferior organoleptic characteristics compared with those containing sugar.

In an attempt to remedy these organoleptic characteristics, there has been an approach mainly to the improvement of sweetness, and many reports refer to the improvement of sweeteners such as saccharin, Stevia extract, Acesulfame and aspartame®.

In the course of studying the organoleptic characteristics of a carbonated beverage containing aspartame®, the present inventors determined that the improvement of sweetness alone does not decrease the difference of its organoleptic characteristics from a carbonated beverage containing sugar. Further investigations on the cause of this have led to the discovery that carbon dioxide gas escapes more easily from a carbonated beverage containing aspartame® than from a beverage containing sugar after the bottle has been opened and therefore the refreshing taste due to the dissolved carbon dioxide gas is more rapidly impaired and its palatability is more rapidly reduced.

There is known a method for stabilizing particulate carbonates and bicarbonates used as ingredients of instant drinks from premature decomposition by coating the particles with a gum. However, no proposal is given as to preventing the escape of solved carbon dioxide from the solution (US-A-2 984 543).

SUMMARY OF THE INVENTION

It is an object of this invention to provide a carbonated beverage containing a sweetening agent of a high degree of sweetness, such as aspartame®, and having excellent refreshing taste, a low calorie content and low tendency to cause caries by preventing the decrease of the dissolved carbon oxide after the bottle has been opened.

The present inventors made extensive investigations on the prevention of the decrease of the dissolved carbon oxide gas in carbonated beverages containing low-calorie sweeteners, and have found that natural gums or carragheenan, pectin or a mixture thereof are effective for preventing the decrease of carbon dioxide gas.

Thus, according to this invention, there is provided a carbonated beverage containing a low-calorie sweetener, and a cold water-soluble natural gum, carragheenan, pectin or a mixture thereof, the low-calorie sweetener being at least one member selected from aspartame®, Acesulfame, Stevia extract, and derivatives thereof, as a part or the whole of its sweetener content.

DETAILED DESCRIPTION OF THE INVENTION

The natural gums used in this invention include vegetal gums, for example edible gums such as ghatti gum, gum arabic, guargum, tamarind gum and xanthan gum. Furthermore carragheenan and pectin are also suitable. They may be used either singly or in combination.

The optimum concentration of the natural gum carragheenan and pectin differs depending upon its type, but generally its concentration in a carbonated beverage is about 5 to 50 mg/dl. When the concentration

2

increases, the consistency of the carbonated beverage increases and becomes thick to the palate and becomes less refreshing. Furthermore, bubbling occurs and persists during pouring into a glass or within the mouth, and its refreshing taste is reduced. On the other hand, if the concentration is too low, the effect of preventing a decrease of the concentration of dissolved carbon dioxide cannot be obtained.

In a model system of a cider-like carbonated drink using various natural gums carragheenan and pectin, the percent residue of dissolved carbon dioxide gas was determined. The measurement was made by opening a well-chilled (5-8 °C) can of the carbonated beverage, and leaving it to stand for a fixed period of time in a constant-temperature vessel at 37°C. The concentrations of dissolved $CO_2$ before and after the can opening were measured by a carbon dioxide meter (Model AI-1003, made by Ishikawa Seisakusho). The results are expressed by

$$\text{Percent residue of dissolved } CO_2 = \frac{CO_2 \text{ concentration after standing}}{\text{initial } CO_2 \text{ concentration}} \times 100$$

Smaller percent residue values indicate greater ease with which $CO_2$ escaped. The results are shown in Table 1.

## Table 1

| Sam-ple | Amounts added | | | pH | Percent residue of dissolved $CO_2$ (%) (*) |
|---|---|---|---|---|---|
| | Sugar (g/dl) | Aspartame® (mg/dl) | Natural gum (mg/dl) | | |
| 1 | 10 | - | - | 3.9 | 40.4 |
| 2 | - | 50 | - | 3.9 | 31.8 |
| 3 | - | 50 | pectin 10 | 3.9 | 36.9 |
| 4 | - | 50 | $\lambda$-carra-gheenan 10 | 3.9 | 36.8 |
| 5 | - | 50 | xanthan gum 10 | 3.9 | 34.9 |
| 6 | - | 50 | tamarind gum 10 | 3.9 | 34.3 |
| 7 | - | 50 | gum arabic 10 | 3.9 | 39.1 |

(*): after standing at 37 °C for 60 minutes

The above samples were subjected to an organoleptic test, and the results are shown in Table 2.

## Table 2

| Sample | Organoleptic evaluation (n=5) | | | |
|--------|-------------------------------|---|---|---|
| | Strength of feeling of carbon dioxide (*) | Pleasant-ness of feel of carbon dioxide (*) | Pleasant-ness of sweet-ness (*) | Overall evalua-tion (**) |
| 1 | 0 | 0 | 0 | 5.8 |
| 2 | 1.4 | 0.4 | -0.4 | 4.6 |
| 3 | 1.2 | 0.8 | 0 | 5.3 |
| 4 | 0.2 | 0.1 | -0.4 | 4.6 |
| 5 | 0.4 | -1.1 | -0.4 | 2.9 |
| 6 | 0.8 | -0.4 | -0.6 | 3.7 |
| 7 | 0.6 | 0.2 | 0 | 5.4 |

Ratings:

(*): A rating of 0 is given to sample 1, and the strength is rated in ±2 grades.

(**): Ratings of 11 grades from 0 (bad taste) to 5 (ordinary) to 10 (good taste) are given.

As shown by the results of Table 1, the percent residue of dissolved carbon gas is high in all systems containing natural gums carragheenan or pectin, and a model system containing gum arabic is closest to one containing sugar. In respect of organoleptic pleasantness, a system containing gum arabic is best, and nearly the same evaluation as one containing sugar is assigned to it.

The carbonated beverage to which the present invention pertains includes clear carbonated beverages such as cola, cider-like soft drink and ginger ale as well as turbid carbonated beverages containing components such as pectin or pulp derived from fruit juices, namely carbonated beverages containing fruit juices. The present invention is especially effective for the clear carbonated beverages.

A low-calorie sweetener having a high degree of sweetness such as aspartame®, Acesulfame, Stevia extract and derivatives thereof, is used as the whole or part of the sweetener in the carbonated beverage. One or a combination of two or more low-calorie sweeteners may be used. The proportion of the low-calorie sweetener in the entire amount of sweeteners is 30 to 90 %, preferably 50 to 80 %, in terms of sweetness based on the total sweetness. When it is used in combination with another sweetening agent, for example sugars such as sucrose, glucose, fructose and isomerized sugar, sugar alcohols such as sorbitol, maltitol and xylitol, reduced maltose, and reduced starch decomposition products, its proportion is determined by considering the desired strength of sweetness and the strengths of the sweetnesses of these sweeteners.

The carbonated beverage of this invention may be produced in accordance with a known method. For example, sweeteners such as aspartame® may be added as a powder and dissolved, or may be mixed in the form of a solution with other ingredients. The natural gum carragheenan, pectin or the mixture thereof may also be added in the conventional manner like aspartame. Carbon dioxide gas in a predetermined amount may be forced into bottles by a carbonator.

By including a natural gum carragheenan or pectin, particularly gum arabic, into a carbonated beverage containing a low-calorie sweetener in such a low concentration as to scarcely cause a thickening effect, there can be obtained a carbonated beverage having high palatability comparable with a beverage containing sugar and a reduced tendency toward the decrease of dissolved carbon dioxide gas after opening the bottle.

The following Examples further illustrate the present invention.

EXAMPLE 1

A lemon-lime carbonated beverage was prepared in a customary manner in accordance with the recipe shown in Table 3. The samples obtained were evaluated, and the results are shown in Table 4.

## Table 3

| Sample | Components | | | | |
|---|---|---|---|---|---|
| | Sugar (g/dl) | AP (mg/dl) | Gum arabic (mg/dl) | Citric acid (g/dl) | Lemon-lime flavor (ml/dl) |
| 1 | 10 | - | - | 0.22 | 0.1 |
| 2 | - | 50 | - | 0.22 | 0.1 |
| 3 | - | 50 | 10 | 0.22 | 0.1 |

(pH 3.9)

## Table 4

| Sample | Percent residue of dissolved $CO_2$ (%) (1) | Organoleptic evaluation (overall) |
|---|---|---|
| 1 | 51.1 | 6.4 |
| 2 | 41.3 | 5 |
| 3 | 49.3 | 5.4 |

(1) On standing at 37 °C for 30 minutes

Sample 3 (containing gum arabic) showed nearly the same percent residue of dissolved $CO_2$ as sample 1

(containing sugar) without impairing the palatability of sample 2 (containing AP), and the escaping of dissolved $CO_2$ was prevented.

EXAMPLE 2

A grape fruit carbonated beverage was prepared in a customary manner in accordance with the recipe shown in Table 5. The samples obtained were evaluated, and the results obtained are shown in Table 6.

### Table 5

| Sample | Components | | | | |
|---|---|---|---|---|---|
| | Liquid sugar of fructose and glucose (g/dl) | AP (mg/dl) | Gum arabic (mg/dl) | Citric acid (g/dl) | Grape fruit flavor (ml/dl) |
| 1 | 1.25 | – | – | 0.22 | 0.2 |
| 2 | 1.25 | 45 | – | 0.22 | 0.2 |
| 3 | 1.25 | 45 | 10 | 0.22 | 0.2 |

(pH 3.9)

### Table 6

| Sample | Percent residue of dissolved $CO_2$ (%) (1) | Organoleptic evaluation (overall) |
|---|---|---|
| 1 | 50.4 | 5.6 |
| 2 | 41.5 | 5.1 |
| 3 | 50.0 | 5.4 |

(1) On standing at 37 °C for 30 minutes

Sample 3 (containing gum arabic) showed nearly the same percent residue of dissolved $CO_2$ as sample 1 (containing sugar) without impairing the palatability of sample 2 (containing AP-isomerized sugar)), and the escaping of dissolved $CO_2$ was prevented.

EXAMPLE 3

A cider-like carbonated beverage was prepared in a customary manner in accordance with the recipe shown in Table 7. The samples obtained were evaluated, and the results are shown in Table 8.

## Table 7

| Sample | Components | | | | |
|--------|-----------|------|-------|-------|--------|
| | Sugar (g/dl) | AP (mg/dl) | Gum arabic (mg/dl) | Citric acid (g/dl) | Cider-flavor (ml/dl) |
| 1 | 10 | – | – | 0.14 | 0.1 |
| 2 | – | 50 | – | 0.14 | 0.1 |
| 3 | – | 50 | 10 | 0.14 | 0.1 |

(pH 3.9)

## Table 8

| Sample | Percent residue of dissolved $CO_2$ (1) | Organoleptic evaluation (overall) |
|--------|-----------------------------------------|-----------------------------------|
| 1 | 40.4 | 6.4 |
| 2 | 31.8 | 5 |
| 3 | 39.1 | 5.8 |

(1) After standing at 37 °C for 30 minutes

Sample 3 (containing gum arabic) had a higher organoleptic rating and a higher percent residue of dissolved $CO_2$ than sample (2) containing AP, and had the same dissolved $CO_2$ escape as sample 1 (containing sugar).

EXAMPLE 4

A cider-like carbonated beverage was prepared in a customary manner in accordance with the recipe indicated Table 9. The samples obtained were evaluated, and the results obtained are shown in Table 10.

Table 9

| Sam- ple | Components | | | | | |
|---|---|---|---|---|---|---|
| | Sugar (g/dl) | AP (mg/dl) | Glucosyl stevio- side (mg/dl) | Gum arabic (mg/dl) | Citric acid (g/dl) | Cider flavor (ml/dl) |
| 1 | 10 | – | – | – | 0.14 | 0.1 |
| 2 | – | 30 | 36.4 | – | 0.14 | 0.1 |
| 3 | – | 30 | 36.4 | 10 | 0.14 | 0.1 |

(pH 3.9)

## Table 10

| Sample | Percent residue of dissolved $CO_2$ (%) | Organoleptic evaluation (overall) |
|---|---|---|
| 1 | 50.8 | 6 |
| 2 | 42.4 | 4.6 |
| 3 | 50.2 | 5 |

Sample 3 (containing gum arabic) had the same percent residue of dissolved $CO_2$ as sample 1 (containing sugar) without impairing the palatibility of sample 2 containing AP-stevia derivative, and the escape of dissolved $CO_2$ was prevented.

**Claims**

1. Carbonated beverage containing a low-calorie sweetener as a part or the whole of its sweetener content and a cold water-soluble natural gum, carragheenan, pectin or a mixture thereof, the low-calorie sweetener being at least one member selected from aspartame, Acesulfame, Stevia extract, and derivatives thereof.

2. The carbonated beverage of claim 1 wherein the natural gum is gum arabic.

**Patentansprüche**

1. Kohlensäurehaltiges Getränk, enthaltend einen kalorienarmen Süßstoff, der einen Teil oder die Gesamtheit des Süßstoffgehalts ausmacht, und einen in kaltem Wasser löslichen natürlichen Gummi, Carrageenan, Pektin oder ein Gemisch davon, wobei der kalorienarme Süßstoff ausgewählt wird unter Aspartame, Acesulfam, Stevia-Extrakt und deren Derivaten.

2. Kohlensäurehaltiges Getränk nach Anspruch 1, wobei der natürliche Gummi Gummi arabicum ist.

**Revendications**

1. Boisson gazéifiée contenant un édulcorant basses calories constituant tout ou partie de sa teneur en édulcorant et une gomme naturelle, de la carragénine, de la pectine ou un mélange de ces substances, soluble dans l'eau froide, l'édulcorant basses calories étant au moins une substance sélectionnée parmi l'aspartame, l'Acesulfame, l'extrait de Stevia et des dérivés de ces substances.

2. Boisson gazéifiée selon la revendication 1, dans laquelle la gomme naturelle est de la gomme arabique.